Europäisches Patentamt

European Patent Office

Office européen des brevets

(11) Veröffentlichungsnummer: **0 205 904**
**A1**

## (12) EUROPÄISCHE PATENTANMELDUNG

(21) Anmeldenummer: **86106688.4**

(51) Int. Cl.⁴: **C 09 C 1/50**

(22) Anmeldetag: **16.05.86**

(30) Priorität: **23.05.85 CH 2195/85**

(71) Anmelder: **BERA ANSTALT, Aeulenstrasse 38, FL-9490 Vaduz (LI)**

(43) Veröffentlichungstag der Anmeldung: **30.12.86**
**Patentblatt 86/52**

(72) Erfinder: **Walder, Rudolf, Weinmanngasse 38, CH-8700 Küsnacht (CH)**

(84) Benannte Vertragsstaaten: **AT BE CH DE FR GB IT LI LU NL SE**

(74) Vertreter: **Rottmann, Richard, Rottmann Patentanwälte AG Dufourstrasse 101, CH-8034 Zürich (CH)**

(54) **Anlage zur Russherstellung.**

(57) Die Anlage weist einen stehenden Reaktor (1) mit Reaktordeckel (2) auf. Die seitliche Begrenzung des Reaktorraumes erfolgt durch Flossenrohre (3), die von einem Kühlmedium durchströmt werden. Die Flossenrohre (3) sind mit einer feuerfesten Schicht versehen, die die Auskleidung des Reaktorraumes bildet.

Die Übergangsstelle zwischen Reaktorkörper (1) und Reaktordeckel (2) ist mit einer weiteren Kühlung (11) versehen. Der Reaktor kann ständig an die thermischen Verhältnisse angepaßt werden, welche zur Herstellung von feinen Rußqualitäten notwendig sind.

Anlage zur Russherstellung

Die vorliegende Erfindung bezieht sich auf eine Anlage zur Russherstellung mit einem stehenden Reaktor mit Reaktordeckel, welcher mit Speiseeinheiten zur dosierten Zufuhr von Luft und Kohlenwasserstoffen versehen ist und Homogenisierräume zum innigen Vermischen der Komponenten aufweist.

Solche Russerzeugungsanlagen sind bereits in den verschiedensten Ausführungsformen bekanntgeworden. Dabei beginnt die Russbildung bei Temperaturen von 700 bis 800°C und erreicht ihr Optimum je nach Russqualität bei ca. 1100 bis 1400°C. Zur Herstellung von unterschiedlichen Russqualitäten sollte u.a. die Brennstoff- und Luftmenge für die Erzeugung der Brenngase entsprechend regulierbar sein, damit diese beiden Komponenten genau aufeinander abgestimmt werden können. Schwierigkeiten bereitet dabei, dass für die Herstellung von Russ mit zunehmend grösserer innerer Oberfläche ein zunehmend grösserer Luftanteil erforderlich ist, wodurch gleichzeitig die thermische Belastung des Reaktors stark ansteigt. Es kann eine thermische Ueberbeanspruchung insbesondere des Verbrennungsraumes im Reaktor auftreten, so dass der Herstellung von feineren Russqualitäten oft Grenzen gesetzt sind, welche sich aus dem konstruktiven Aufbau des Reaktors ergeben.

Der Erfindung liegt demnach die Aufgabe zugrunde, eine Anlage zur Russerzeugung der eingangs beschriebenen Art vorzuschlagen, bei welcher die thermische Ueberhitzung oder thermische Ueberbeanspruchung des Reaktors zuverlässig verhindert wird, ohne dass zur Wärmeabfuhr Wasser direkt ins Russgas eingespritzt werden muss.

Nach dem erfindungsgemässen Vorschlag wird bei einer Anlage mit den im Oberbegriff des Anspruches 1 erwähnten Merkmalen die seitliche Begrenzung des Reaktorraumes aus einem, von einem Kühlmedium durchströmten Rohr gebildet, welches zusammen mit dem gekühlten Deckel den Verbrennungsraum umgibt. Auf diese Weise wird eine kühltechnisch besonders wirksame Massnahme vorgeschlagen, welche konstruktiv einfach durchführbar ist.

Gemäss einer bevorzugten Ausführungsform der Anlage besteht das Rohrgebilde aus vertikal verlaufenden Rohrstücken, welche eine zylindrische Flossenrohrwand bilden, die oben und unten an je einen Ringsammler angeschlossen ist. Eine feuerfeste Innenverkleidung schützt die Flossenrohrwand des Verbrennungsraumes.

Eine weitere vorteilhafte Ausführung besteht darin, dass an der Uebergangsstelle zwischen Deckel und zylindrischer Flossenrohrwand zusätzliche Kühlorgane vorhanden sind, welche eine Ueberhitzung wirksam verhindern.

Zusammenfassend kann also gesagt werden, dass bei der vorgeschlagenen Anlage sowohl der Reaktordeckel als auch der Reaktorraum durch separate Kühlorgane gekühlt wird, wozu noch zusätzlich an der Uebergangsstelle zwischen dem Reaktordeckel und dem zylindrischen Verbrennungsraum eine weitere Kühlung vorhanden ist, welche eine Kühlspirale aufweist, die im Bereiche einer am oberen Ringsammler befestigten zylindrischen Manschette in eine Stampfmasse eingebettet ist.

Weitere Merkmale der Erfindung ergeben sich aus der Beschreibung sowie aus der Zeichnung, welche eine beispielsweise Ausführungsform einer Anlage darstellt. Es zeigen:

Fig. 1    eine Ansicht einer Anlage, teilweise im Vertikalschnitt;

Fig. 2    einen Horizontalschnitt gemäss der Linie A-A

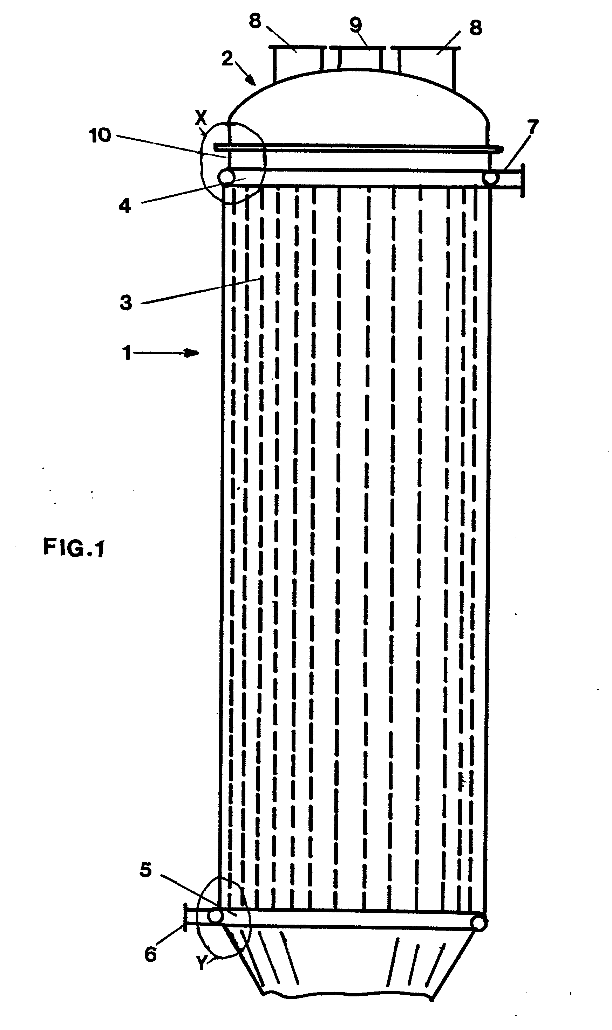

          in Fig. 1 in vergrössertem Massstab gezeichnet;

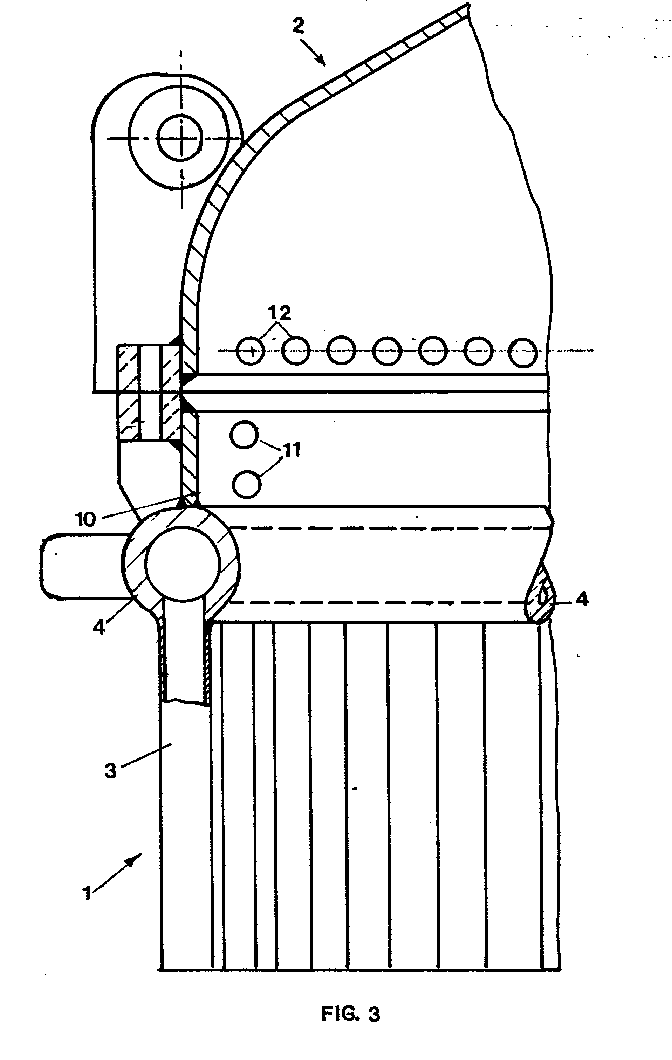

Fig. 3    eine Einzelheit im Vertikalschnitt in vergrösserter Darstellung, welche die in der Fig. 1
          mit X bezeichnete Stelle beinhaltet;

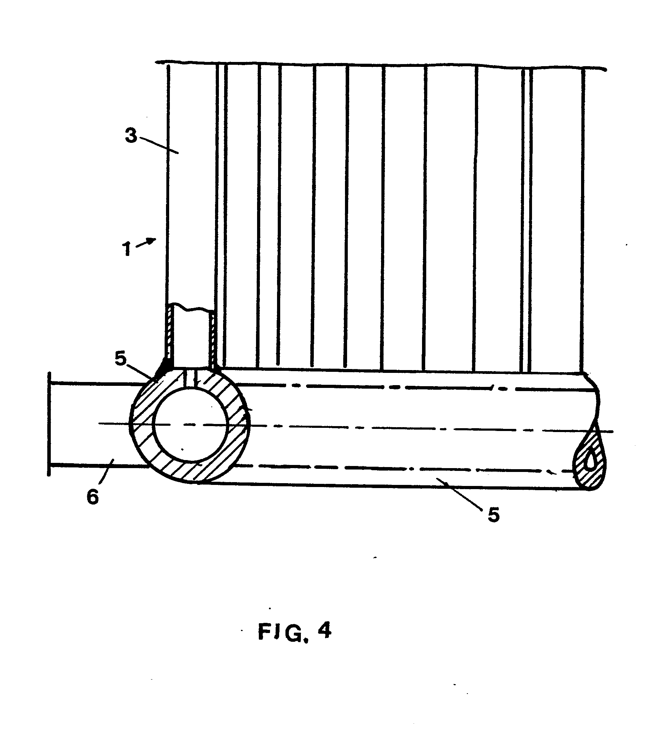

Fig. 4    eine ähnliche Einzelheit, welche die in der Fig. 1
          mit Y bezeichnete Stelle beinhaltet; und

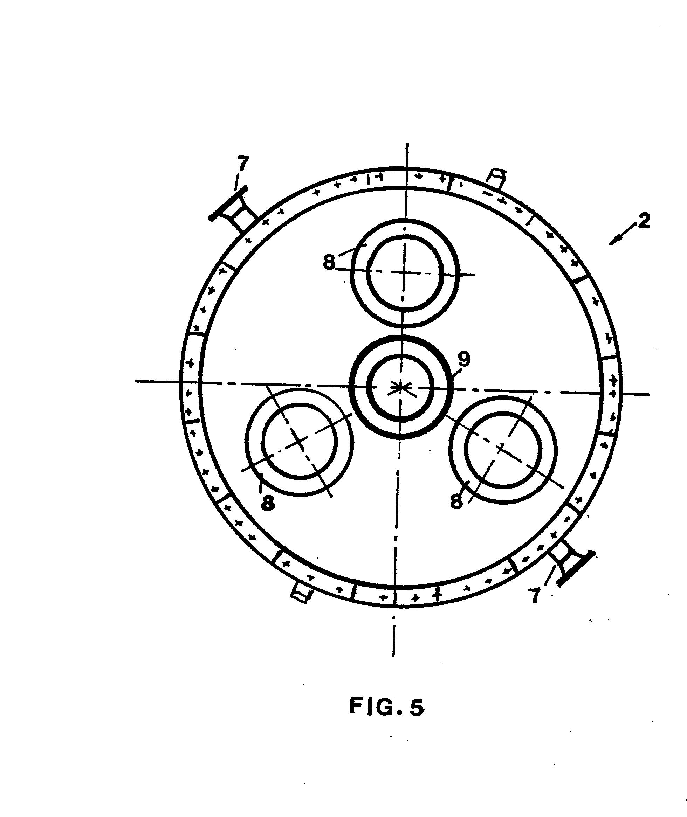

Fig. 5    eine Ansicht von oben in der Pfeilrichtung Z in
          der Fig. 1.

Zur Herstellung von Russ wird ein Kohlenwasserstoff, z.B.
Schweröl und ein Sauerstoff enthaltendes Gas, meistens
Luft, verwendet. Das Schweröl wird zunächst vorgewärmt
und auf den Einspritzdruck gebracht und in der gewünschten
Menge Einspritzdüsen zugeführt. Die Verbrennungsluft wird
von einem Gebläse geliefert, wobei das diesbezügliche
Vorgehen bekannt ist und in Verbindung mit der vorliegenden Erfindung nicht näher beschrieben wird. Die Verbrennungsluft wird ebenfalls vorgewärmt, was z.B. unter Ausnutzung des Heizwertes der Prozessabluft in einer Nachverbrennungsanlage erfolgen kann.

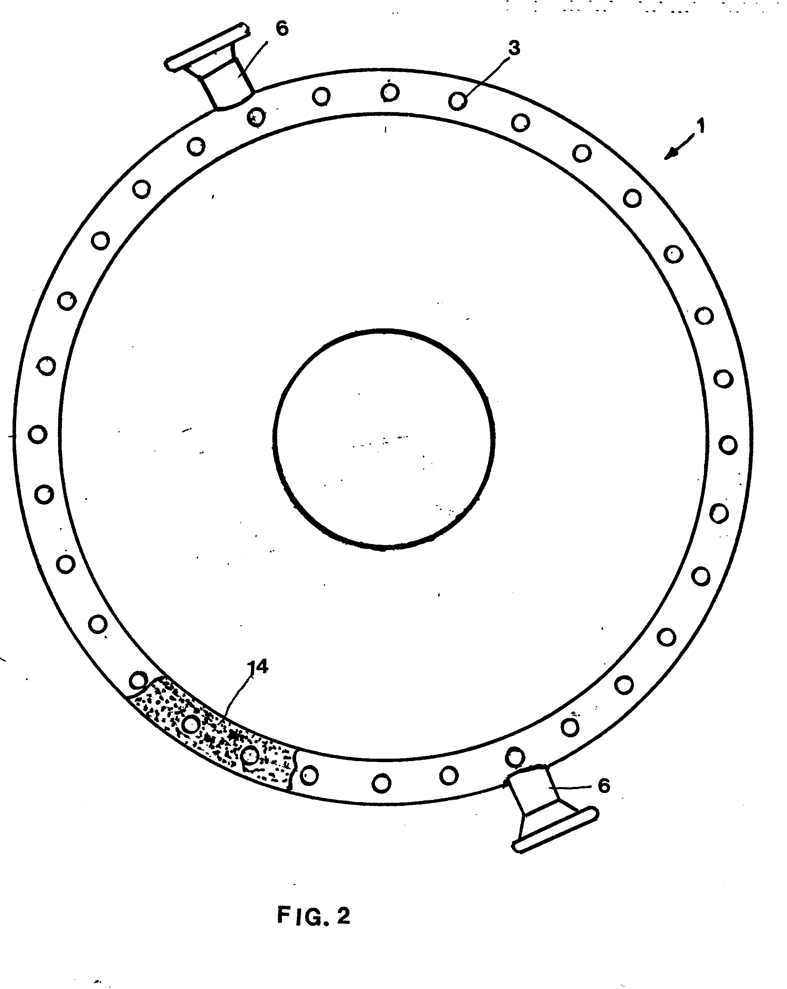

In der Fig. 1 ist ein stehender Reaktor mit vertikaler
Achse dargestellt, welcher einen Reaktorkörper 1 und einen
Deckel 2 aufweist. Der Reaktorkörper ist zylindrisch geformt und besteht aus einem von einem Kühlmedium durchströmten Rohrgebilde, welches aus einzelnen, sich vertikal nach oben und parallel zueinander verlaufenden Flossenrohren 3 zusammengesetzt ist. Die Flossenrohre 3 stehen
oben und unten mit je einem Ringsammler 4 bzw. 5 in Verbindung. Der Ringsammler 4 besteht aus einem kreisförmig
gebogenen Rohr mit einem Kreisdurchmesser, welcher dem
Durchmesser des Reaktorkörpers 1 entspricht. Wie aus der
Fig. 3 ersichtlich ist, mündet jedes Flossenrohr 3 oben
in den Ringsammler 4, durch welchen die einzelnen Flossenrohre 3 miteinander in Verbindung stehen. Eine ähnliche
Ausbildung weist der untere Ringsammler 5 auf, an welchem
die gleichen vertikalen Flossenrohre 3 unten angeschlossen sind. Sowohl der untere Ringsammler 5 als auch der
obere Ringsammler 4 ist mit einem Anschluss 6 bzw. 7 versehen. Der Anschluss 6 am unteren Ringsammler 5 dient zum
Kühlmediumeintritt, während der Anschluss 7 den Kühlmediumaustritt bildet. Es sei noch erwähnt, dass auch mehrere
Anschlüsse für den Kühlmediumeintritt und für den -austritt
vorhanden sein können. Gemäss der Schnittzeichnung in der
Fig. 2 sind diametral entgegengesetzt zwei Kühlmediumeintritte 6 vorhanden, welche - wie erwähnt - an den Ringsammler 5 angeschlossen sind.

Der aus den Flossenrohren 3 bestehende Reaktorkörper ist
als zylindrische Wand ausgebildet und mit einer feuerfesten Stampfmasse als Innenverkleidung 8 versehen. In
diesem mit Stampfmasse verkleideten Raum findet die Verbrennung statt, nachdem die Reaktionskomponenten innig
vermischt wurden. Die Zuführung derselben erfolgt durch
den Reaktordeckel 2, welcher oben auf dem Reaktorkörper
1 aufgesetzt ist und eine domförmige Gestaltung aufweist.
Der Deckel 2 ist mit einem flachen Boden versehen, welcher den Reaktorraum nach oben begrenzt und mit einer Kühlung ausgerüstet ist. Zweckmässigerweise ist im Boden eine
Kühlschlange vorhanden, in welcher ein Kühlmedium zirkuliert.
Die diesbezügliche nähere Ausbildung bildet nicht Gegenstand der vorliegenden Erfindung und wird nicht dargestellt und beschrieben.

Ferner ist der Reaktordeckel mit drei Speiseeinheiten 13
versehen, welche in entsprechende Ausnehmungen im domförmigen Oberteil des Reaktordeckels 2 eingesetzt sind und
zum Zuführen von Schweröl und Verbrennungsluft dienen. Im
weitern ist noch eine zentrale Oeffnung 9 vorgesehen, in
welche ein Gasbrenner eingesetzt wird, mit welchem die
Reaktion in Gang gesetzt wird.

An der Uebergangsstelle zwischen dem Reaktordeckel 2 und
dem Reaktorkörper 1 ist eine zylindrische Manschette 10
vorhanden, welche mit dem oberen Ringsammler 4 verschweisst
ist. In die Manschette 10 ist eine Kühlspirale 11 eingelegt und in eine feuerfeste Stampfmasse 14 eingebettet.
Aus der Fig. 3 ist die nähere Ausbildung und Anordnung
der Manschette 10 und der Kühlspirale 11 ersichtlich,
welche mit der den Zwischenraum ausfüllenden Stampfmasse
14 den Reaktorwulst bildet. Die Kühlspirale 11 besitzt
entweder einen separaten Anschluss für den Zulauf und einen weiteren Anschluss für den Ablauf des Kühlmediums
oder ist an den Kühlkreislauf durch die Flossenrohrwand
angeschlossen.

Dem Reaktorkörper 1 ist der Sammler eines vertikalen
Rohrbündel-Wärmeaustauschers nachgeschaltet (nicht dargestellt). Es ist auch möglich, diesem Wärmeaustauscher
einen weiteren Wärmeaustauscher nachzuschalten.

Die beschriebene Anlage arbeitet wie folgt:

Zunächst wird der in der Mitte des Reaktordeckels angeordnete Vorbrenner in Betrieb gesetzt und nach erfolgter
Aufheizung die aufbereiteten flüssigen Kohlenwasserstoffe sowie die entsprechend vorgewärmte Reaktionsluft in die Speiseeinheiten geführt, wo je ein Homogenisierraum vorhanden ist, in welchem eine innige Vermischung der Kohlenwasserstoffe mit der Reaktionsluft erfolgt, jedoch keine Verbrennung stattfindet. Das homogenisierte Gemisch tritt dann in den Verbrennungsraum ein, welcher sich im oberen Teil des Reaktorkörpers 1 befindet. Hier erfolgt die Umsetzung der Reaktionsteile, wobei ein Teil des Schweröls zur Erzeugung der Reaktionswärme verbrannt und der andere Teil zu Russ umgewandelt wird. Im Bereiche, wo die Mischung der Komponenten Luft und Schweröl stattfindet, sowie im nachfolgenden Bereiche, wo das Schweröl verbrannt wird, erfolgt eine wirksame Kühlung, so dass die Temperaturverhältnisse ständig beherrscht werden. Insbesondere bringt die Ausbildung der gesamten Mantelfläche des Reaktorkörpers als Kühlfläche grosse Vorteile mit sich. Dadurch kann der Reaktor ständig an die thermischen Verhältnisse angepasst werden, welche zur Herstellung von feinen Russqualitäten notwendig sind. Die Anlage kann somit sehr vielfältig für die verschiedensten Zwecke gebraucht werden.

Es sei noch erwähnt, dass das die seitliche Begrenzung des Reaktorraumes bildende Rohrgebilde auch als kontinuierliche Kühlschlange ausgebildet sein kann, welche aus einer um eine vertikale Achse gewickelten Spirale besteht.

Nach dem Verlassen des Reaktors werden die russhaltigen Gase in den nachgeschalteten Wärmeaustauschern indirekt gekühlt, so dass sie ohne Wassereinspritzung zur direkten Kühlung der Russabscheidung zugeführt werden können.

0205904

## Patentansprüche

1. Anlage zur Russherstellung mit einem stehenden Reaktor mit Reaktordeckel (2), welcher mit Speiseeinheiten (13) zur dosierten Zufuhr von Luft und Kohlenwasserstoffen versehen ist und Homogenisierräume zum innigen Vermischen der Komponenten aufweist, dadurch gekennzeichnet, dass die seitliche Begrenzung des Reaktorraumes aus einem von einem Kühlmedium durchströmten Rohrgebilde (3, 4, 5) besteht, welches zusammen mit dem gekühlten Deckel (2) den Verbrennungsraum umgibt.

2. Anlage nach Anspruch 1, dadurch gekennzeichnet, dass das Rohrgebilde aus vertikal verlaufenden Rohrstücken (3) besteht, welche eine zylindrische Flossenrohrwand bilden, die oben und unten an je einen Ringsammler (4, 5) angeschlossen ist.

3. Anlage nach den Ansprüchen 1 und 2, dadurch gekennzeichnet, dass die Flossenrohrwand mit einer feuerfesten Schicht (8) ausgekleidet ist.

4. Anlage nach den Ansprüchen 1 bis 3, dadurch gekennzeichnet, dass an der Uebergangsstelle zwischen der zylindrischen Flossenrohrwand und dem Reaktordeckel (2) eine weitere Kühlung (11) vorhanden ist.

5. Anlage nach den Ansprüchen 1 bis 4, dadurch gekennzeichnet, dass die Kühlung an der Uebergangsstelle eine Kühlspirale (11) aufweist, die im Bereiche einer am oberen Ringsammler (4) befestigten zylindrischen Manschette (10) in eine Stampfmasse (14) eingebettet ist.

14.05.1986                                                    XA 5689 EP

6.     Anlage nach Anspruch 1, dadurch gekennzeichnet, dass das Rohrgebilde aus einer um die vertikale Achse gewickelten Spirale besteht.

7.     Anlage nach Anspruch 1, dadurch gekennzeichnet, dass das Rohrgebilde als Dampferzeuger ausgebildet ist.

8.     Anlage nach Anspruch 1, dadurch gekennzeichnet, dass dem Reaktor (1) mindestens ein Wärmeaustauscher nachgeschaltet ist, in welchem das Russ-Gasgemisch weiter abgekühlt wird.

0205904

**FIG.1**

FIG. 2

2/5    0205904

FIG. 3

FIG. 4

FIG. 5

0205904

5/5

Europäisches
Patentamt

**EUROPÄISCHER RECHERCHENBERICHT**

0205904
Nummer der Anmeldung

EP 86 10 6688

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 595 618  (K. KIYONAGA et al.)<br>* Figur; Spalte 6, Zeilen 5-11,43-52 *<br><br>--- | 1 | C 09 C   1/50<br>F 27 D   1/12<br>F 27 D   9/00<br>F 23 M   5/08 |
| A | DE-A-3 009 850  (KARRENA GmbH)<br>* Ansprüche 1,3,6 *<br><br>--- | 1-3 | |
| A | DE-A-2 559 891  (Dr. C. OTTO & CO. GmbH)<br><br>--- | | |
| A | EP-A-0 126 926  (HOECHST AG)<br><br>--- | | |
| A | US-A-3 248 252  (R.M. SCHIRMER et al.)<br><br>--- | | RECHERCHIERTE SACHGEBIETE (Int. Cl.4) |
| A | US-A-2 873 172  (R.W. LESLIE et al.)<br><br>----- | | C 09 C   1/00<br>B 01 J   19/00<br>F 27 D   1/00<br>F 23 M   5/00<br>F 27 D   9/00 |

Der vorliegende Recherchenbericht wurde für alle Patentansprüche erstellt.

| Recherchenort | Abschlußdatum der Recherche | Prüfer |
|---|---|---|
| DEN HAAG | 19-09-1986 | SCHUT,R.J. |